# EUROPÄISCHE PATENTSCHRIFT

(11) **EP 3 917 714 B1**
(45) Veröffentlichungstag und Bekanntmachung des Hinweises auf die Patenterteilung: **17.01.2024**
(21) Anmeldenummer: 20702453.0
(22) Anmeldetag: 28.01.2020
(51) Int. Cl.: B23K 26/03, B23K 26/08, B23K 26/21, B23K 26/38, B23K 26/382, B23K 31/12, B23K 37/02, B23K 37/04, G06F 30/20

(54) **VERFAHREN ZUM AUTOMATISIERTEN ERMITTELN DES EINFLUSSES EINES LASERBEARBEITUNGSPARAMETERS AUF EINE LASERBEARBEITUNG SOWIE LASERBEARBEITUNGSMASCHINE UND COMPUTERPROGRAMMPRODUKT**
METHOD FOR AUTOMATICALLY DETERMINING THE INFLUENCE OF A LASER MACHINING PARAMETER ON A LASER MACHINING PROCESS, AND LASER MACHINING MACHINE AND COMPUTER PROGRAM PRODUCT
PROCÉDÉ DE DÉTERMINATION AUTOMATISÉE DE L'INFLUENCE D'UN PARAMÈTRE D'USINAGE AU LASER SUR UN USINAGE AU LASER AINSI QUE MACHINE D'USINAGE AU LASER ET PRODUIT PROGRAMME INFORMATIQUE

(30) Priorität: 28.01.2019 DE 102019201033
(43) Veröffentlichungstag der Anmeldung: 08.12.2021
(73) Patentinhaber: Trumpf Laser- und Systemtechnik GmbH, 71254 Ditzingen (DE)
(72) Erfinder: SCHELLENBERG, Artur, 79395 Neuenburg am Rhein (DE); SEEBACH, Johannes, 70193 Stuttgart (DE)
(74) Vertreter: Trumpf Patentabteilung
(86) Internationale Anmeldenummer: PCT/EP2020/052016
(87) Internationale Veröffentlichungsnummer: WO 2020/157050

(56) Entgegenhaltungen:
- CA-A1- 2 242 139
- DE-B3-102012 100 721
- US-A1- 2006 261 050
- US-A1- 2010 276 080

## Beschreibung

Die Erfindung betrifft ein Verfahren zum Ermitteln des Einflusses eines Laserbearbeitungsparameters auf eine Laserbearbeitung mittels eines Laserstrahls, sowie eine zum Durchführen des Verfahrens geeignete Laserbearbeitungsmaschine und ein Computerprogrammprodukt.

Beim Schneiden mittels eines Laserstrahls kann eine Verschlechterung der Schnittqualität bis hin zum Schnittabriss auftreten. Ursache sind meistens Abweichungen im Laserstrahlprofil. Folge sind hohe Maschinenstillstandzeiten und unzufriedene Kunden. Aktuell existiert keine Möglichkeit, der Fehlerursache maschinell auf den Grund zu gehen, sondern die Laserbearbeitungsmaschine muss angehalten werden, damit sich ein dafür qualifizierter Mitarbeiter um das Problem kümmern kann. Aktuell werden zum Einstellen bzw. Überprüfen des optischen Soll-Zustandes der Laserbearbeitungsmaschine unterschiedliche Verfahren angewendet, die einer subjektiven Auswertung unterliegen. Ferner sind kostspielige Messmittel, hoher Zeitaufwand sowie spezielles Knowhow notwendig, um z.B. einen leistungsabhängigen Fokusshift, einen Leistungsverlust, eine Fokusdurchmesserveränderung etc. zu ermitteln.

Allgemein beschreibt im Zusammenhang mit Qualitätsanforderungen die Druckschrift US 2010/276080 A1 ein Verfahren zum schnellen und flexiblen Laserschweißen, wobei gesteuerte und angepasste Scanspiegel verwendet werden. Bei diesem Verfahren wird die Geschwindigkeit des Laserstrahls erhöht im Zusammenhang mit dem Erhöhen der Fokuslänge auf einen bestimmten Wert, um die Schweißqualität zu gewährleisten. Die Druckschrift CA 2 242 139 A1 (offenbarend all Merkmale und Schritte des Oberbegriffes der Ansprüche 1 und 14) beschreibt ein Verfahren zum Fügen von Werkstücken mit einer Steuerungseinrichtung, welche eine bestimmte effektive Leistung einer Laserlichtquelle einstellt in Abhängigkeit einer

Schweißgeschwindigkeit, einer Materialdichte, der spezifischen Wärme, der Schmelztemperatur, der Enthalpie und der Temperatur der Schmelze. Die Druckschrift US 2006/0261050 A1 beschreibt einen Strahlteiler, welcher einen Laserstrahl in zwei Anteile aufteilt, die in unterschiedlichen Fokusebenen an einem Wafer auftreffen.

Demgegenüber liegt der vorliegenden Erfindung die Aufgabe zugrunde, ein einfaches und kostengünstiges Verfahren anzugeben, mit dem der Einfluss eines Laserbearbeitungsparameters auf die Laserbearbeitung, insbesondere automatisiert, bestimmt werden kann. Insbesondere sollen in kürzester Zeit auch der optimale Laserbearbeitungsparameterwert und die Ursache von Laserbearbeitungsparameteränderungen gefunden werden.

Diese Aufgabe wird erfindungsgemäß durch ein Verfahren zum Ermitteln, insbesondere zum automatisierten Ermitteln, des Einflusses eines Laserbearbeitungsparameters auf eine Laserbearbeitung mittels eines Laserstrahls mit folgenden Schritten gelöst:
(a) Durchführen, insbesondere vollautomatisches Durchführen, von linienförmigen Laserbearbeitungen bei unterschiedlichen Werten des Laserbearbeitungsparameters, wobei bei den Laserbearbeitungen die Vorschubgeschwindigkeit des Laserstrahls jeweils mindestens so weit erhöht wird, bis es zu einem Bearbeitungsabriss kommt; und
(b) Ermitteln, insbesondere vollautomatisches Ermitteln, des Zusammenhangs zwischen den Bearbeitungslängen, den zugehörigen Bearbeitungszeiten oder den zugehörigen Abrissgeschwindigkeiten der Laserbearbeitungen und dem Laserbearbeitungsparameter anhand der gemessenen Bearbeitungslängen, der zugehörigen Bearbeitungszeiten oder der zugehörigen Abrissgeschwindigkeiten der Laserbearbeitungen.

Erfindungsgemäß detektiert entweder eine Sensorik (z.B. eine Photodiode im Laserstrahlerzeuger) vollautomatisch (mannlos) oder eine Bedienperson einen durch den Laserbearbeitungsprozess verursachten Bearbeitungsabriss in Abhängigkeit des Laserbearbeitungsparameters. Die Auswertung erfolgt entweder durch eine Maschinensteuerung der Laserbearbeitungsmaschine vollautomatisch (mannlos) oder durch die Bedienperson. Bei dem Laserbearbeitungsparameter handelt es sich bevorzugt um laserstrahlseitige Parameter (Wellenlänge, Strahlqualität, Intensitätsverteilung, Fokuslage des Laserstrahls in Strahlrichtung (z-Fokuslage), Fokusdurchmesser des Laserstrahls oder der Laserleitung, Laserleistung, ...) und/oder um einen gasdynamischen Parameter bei vorbestimmter Gaszusammensetzung, welcher insbesondere durch Düsenart, Düsendurchmesser, Abstand von Düse und Werkstück bestimmt ist.

Ausgehend von einem Start-Vorschub wird auf stets gleiche Weise, z.B. kontinuierlich oder schrittweise, auf einen End-Vorschub mit gezündetem Laserstrahl beschleunigt. Die laserseitige Sensorik detektiert vollautomatisch und mannlos die Laserbearbeitungszeit zwischen Laserbearbeitungsbeginn und Abriss der jeweiligen Laserbearbeitung. Aufgrund der stets gleichen Beschleunigung ist die Laserbearbeitungszeit repräsentativ für die jeweilige Laserbearbeitungslänge bei dem jeweiligen Wert des Laserbearbeitungsparameters. Alternativ kann die Maschinensteuerung auch die zum Zeitpunkt des Abrisses herrschende Vorschubgeschwindigkeit als Abrissgeschwindigkeit feststellen und dem jeweiligen Wert des Laserbearbeitungsparameters zuordnen; in diesem Fall braucht die Laserbearbeitungsgeschwindigkeit nicht auf die stets gleiche Weise beschleunigt zu werden, sondern kann beliebig beschleunigt werden. In der manuellen Variante wird die Laserbearbeitungslänge von der Bedienperson gemessen und dem jeweiligen Wert des Laserbearbeitungsparameters zugeordnet.

In einer ersten bevorzugten Verfahrensvariante wird der Einfluss eines Schneidparameters auf eine Werkstückbearbeitung mittels des Laserstrahls ermittelt, insbesondere automatisiert ermittelt, mit folgenden Schritten:
(a) Durchführen, insbesondere automatisiertes Durchführen, von linienförmigen Laserschnitten an einem Werkstück bei unterschiedlichen Werten des Schneidparameters, wobei bei den Laserschnitten die Schneidgeschwindigkeit jeweils mindestens so weit erhöht wird, bis es zu einem Schnittabriss kommt; und
(b) Ermitteln, insbesondere automatisiertes Ermitteln, des Zusammenhangs zwischen den Schnittlängen, den zugehörigen Schneidzeiten oder den zugehörigen Abrissgeschwindigkeiten der Laserschnitte und dem Schneidparameter anhand der gemessenen Schnittlängen, der zugehörigen Schneidzeiten oder der zugehörigen Abrissgeschwindigkeiten der Laserschnitte.

In einer zweiten bevorzugten Verfahrensvariante wird der Einfluss eines Schweißparameters auf eine Werkstückbearbeitung mittels des Laserstrahls ermittelt, insbesondere automatisiert ermittelt, mit folgenden Schritten:
(a) Durchführen, insbesondere automatisiertes Durchführen, von linienförmigen Laserdurchschweißungen an einem Werkstück bei unterschiedlichen Werten des Schweißparameters, wobei bei den Laserdurchschweißungen die Schweißgeschwindigkeit jeweils mindestens so weit erhöht wird, bis es zu einem Durchschweißabriss, also einem Übergang zum Einschweißen, kommt; und
(b) Ermitteln, insbesondere automatisiertes Ermitteln, des Zusammenhangs zwischen den Durchschweißlängen, den zugehörigen Schweißzeiten oder den zugehörigen Abrissgeschwindigkeiten der Laserdurchschweißungen und dem Schweißparameter anhand der gemessenen Durchschweißlängen, der zugehörigen Schweißzeiten oder der zugehörigen Abrissgeschwindigkeiten der Laserdurchschweißungen.

Veränderungen im Laserstrahl, z.B. aufgrund Verschmutzung der Optiken, können durch die Propagationsstrecke in der Maschine erkannt und negative Auswirkungen auf das Schweißergebnis frühzeitig unterbunden werden. Durch Verschmutzung der Schweißoptik (Spritzer) wird ein Teil der Laserleistung an den optischen Komponenten absorbiert und fehlt im Prozess am Werkstück. Entsprechend wird die Durchschweißschwelle früher erreicht (da ein Teil der Energie fehlt) und die Durchschweißstrecke wird entsprechend verkürzt. Dies kann durch das vorgestellte Verfahren erfasst werden. Um beim Laserstrahlschweißen die Laserstrahleigenschaften mittels Schweißprozess zu diagnostizieren, wird die sogenannte Durchschweißschwelle herangezogen. Dies ist der Übergang vom Einschweißprozess in Durchschweißprozess oder umgekehrt. An der Durchschweißschwelle reicht also die Strahlungsenergie gerade aus, um den Werkstoff über die gesamte Blechdicke aufzuschmelzen. Die Geschwindigkeit wird, bei sonst konstanter Parametrierung, kontinuierlich gesteigert. Zunächst erfolgt eine Durchschweißung des Blechs mit Leistungsüberschuss. Nimmt die Geschwindigkeit weiter zu, wird die oben erwähnte Durchschweißschwelle erreicht, welche hier als Kriterium für die Auswertung dient. Bei weiterer Steigerung des Vorschubs reicht die Energie für eine Durchschweißung nicht aus, sodass im weiteren Verlauf eine Einschweißung bzw. ein Abriss der Durchschweißung erfolgt. Variiert nun im nächsten Schritt z.B. die Fokuslage, wird der Vorschub der Durchschweißschwelle verändert und tritt früher ein, wenn die Schweißnaht breiter ist, oder später, wenn die Schweißnahbreite kleiner ist. Über die Variation der Fokuslagen lässt sich auf der Blechunterseite die längste Strecke entweder manuell ausmessen, oder durch Sensorik (z.B. Einschweißtiefensensor (OCT) oder Lasergerät-interne Diode) automatisch detektieren. Auf diese Weise wird es möglich, laserseitige Eigenschaften zu überprüfen und im Condition Monitoring der Maschine wiederzugeben und Handlungsempfehlungen bei Verletzung einer Schwelle zu empfehlen.

In einer dritten bevorzugten Verfahrensvariante wird der Einfluss eines Umschmelzparameters beim Umschmelzen von Metallpulver mittels des Laserstrahls ermittelt, insbesondere automatisiert ermittelt, mit folgenden Schritten:
(a) Erzeugen, insbesondere automatisiertes Erzeugen, von linienförmigen Schmelzespuren bei unterschiedlichen Werten des Umschmelzparameters, wobei bei den Schmelzespuren die Vorschubgeschwindigkeit des Laserstrahls jeweils mindestens so weit erhöht wird, bis es zu einem Schmelzespurabriss kommt; und
(b) Ermitteln, insbesondere automatisiertes Ermitteln, des Zusammenhangs zwischen den Schmelzespurlängen, den zugehörigen Umschmelzzeiten oder den zugehörigen Abrissgeschwindigkeiten der Schmelzespuren und dem Umschmelzparameter anhand der gemessenen Schmelzespurlängen, der zugehörigen Umschmelzzeiten oder der zugehörigen Abrissgeschwindigkeiten der Schmelzespuren.

Veränderungen des optischen Setups unter Prozesspulvereintrag beim LMD (Laser Metal Deposition)-Prozess, z.B. aufgrund Verschmutzung der Optiken, können durch die Propagationsstrecke in der Maschine erkannt und negative Auswirkungen auf das Umschmelzergebnis frühzeitig unterbunden werden. Durch lineare Veränderung einer Stellgröße unter schrittweiser Variation einer weiteren Stellgröße wird die längste Umschmelzespur ermittelt, die bei gegebenem Energieeintrag unter Wechselwirkung mit dem Pulver bzw. einem Pulverstrahl entsteht. Die längste Schmelzespur wird mit laserseitigen Sensoren von der Maschine automatisiert ausgewertet. Die Energie des Laserstrahls wird zum Auf- und Umschmelzen von Metallpulver in Abhängigkeit der Laserstrahltaillenlage unterschiedlich effizient umgesetzt. Als Wirkgröße ist die Wechselwirkungslänge zwischen Laserstrahl und Pulver zu betrachten, welche zu einer bestimmten Umschmelzrate führt. Erfindungsgemäß kann die Umschmelzrate zur Prozessdiagnostik herangezogen werden, um eine Bewertung des Maschinenzustandes in horizontaler, verkippter oder vertikaler Anordnung des LMD-Prozesses vorzunehmen.

Nimmt bei gegebener Wechselwirkungslänge die Vorschubgeschwindigkeit zu, wird eine Grenzgeschwindigkeit erreicht, ab der die Umschmelzung aufgrund zu geringem Energieeintrag nicht mehr hinreichend erfolgt, die Wechselwirkungslänge zu kurz ist und keine Anbindung des verflüssigen Pulvers an die Werkstückoberfläche stattfindet. Damit stellt sich an der Grenzgeschwindigkeit die maximale Schmelzespurlänge ein. Oberhalb dieser Grenzgeschwindigkeit absorbiert das Pulver die Laserstrahlung, bindet aber nicht mehr an das Trägermaterial an. Die Bestimmung der Schmelzespurlängen erfolgt z.B. durch Auswertung des prozessseitigen Streulichtes, bei Anbindung der Schmelze an den Trägerwerkstoff stellt sich eine Veränderung der Emission ein. Vom Zeitpunkt des Prozessstarts bis zur Signaländerung kann die Zeit ermittelt werden und damit die Grenz- oder Abrissgeschwindigkeit berechnet werden. Die Bestimmung der maximalen Schmelzspurlänge kann auch mit Triangulations- oder OCT-basierten Methoden erfolgen.

Die Erfindung ist sowohl für cw-Betrieb als auch Pulsbetrieb geeignet, solange die Energie ausreicht, um das Material zu trennen und auf- oder umzuschmelzen.

Vorzugsweise wird der Laserstrahl bei Erreichen des Bearbeitungsabrisses ausgeschaltet, z.B. von einer laserseitigen Sensorik in der Strahlquelle oder von einer Sensorik außerhalb der Strahlquelle.

Besonders bevorzugt wird derjenige Parameterwert, bei dem die Bearbeitungslänge bzw. die zugehörige Bearbeitungszeit bzw. die zugehörige Abrissgeschwindigkeit der Laserbearbeitungen maximal ist, als der optimale Parameterwert bestimmt, insbesondere automatisiert bestimmt. Dabei kann der optimale Parameterwert durch Interpolation der gemessenen Bearbeitungslängen, der gemessenen Bearbeitungszeiten oder der festgestellten Abrissgeschwindigkeiten bestimmt werden. Im vollautomatischen Fall kann sich die Maschine dann selbst auf diesen optimalen Parameterwert einstellen. Die optimalen Parameterwerte weichen so bei unterschiedlichen Laserbearbeitungsmaschinen kaum voneinander ab, da die subjektive Auswertung entfällt.

Ist der zu ermittelnde optimale Parameterwert eine optimale z-Fokuslage des Laserstrahls, werden in Schritt (a) die Laserbearbeitungen bei unterschiedlichen z-Fokuslagen des Laserstrahls durchgeführt. Wenn die optimale z-Fokuslage des Laserstrahls jeweils für unterschiedliche Laserleistungen ermittelt wird, kann daraus ein leistungsabhängiger Fokusshift bestimmt werden.

Ist der zu ermittelnde optimale Parameterwert ein optimaler Fokusdurchmesser des Laserstrahls, werden in Schritt (a) die Laserbearbeitungen bei unterschiedlichen Fokusdurchmessern des Laserstrahls durchgeführt.

Um einen im Lauf der Zeit auftretenden Leistungsverlust oder eine im Lauf der Zeit auftretende Strahlaufweitung feststellen zu können, werden bei nominell gleicher Laserleistung und nominell gleichem Fokusdurchmesser die Schritte (a) und (b) für unterschiedliche Werte des Laserbearbeitungsparameters "z-Fokuslage" zu zwei unterschiedlichen Zeitpunkten durchgeführt, insbesondere automatisiert durchgeführt. Die beiden dabei jeweils ermittelten Zusammenhänge (Kurven) zwischen den Bearbeitungslängen der Laserbearbeitungen, den zugehörigen Bearbeitungszeiten oder den Abrissgeschwindigkeiten von dem Laserbearbeitungsparameter "z-Fokuslage" werden miteinander verglichen, um dadurch einen Leistungsverlust oder eine Strahlaufweitung festzustellen. Im Falle eines Leistungsverlusts ergibt sich über den gesamten Wertebereich des Laserbearbeitungsparameters "z-Fokuslage" bei der später ermittelten Kurve eine Abnahme (negativer Offset) der jeweiligen Bearbeitungslängen, Bearbeitungszeiten oder Abrissgeschwindigkeiten. Im Falle einer Strahlaufweitung schneiden sich die beiden Kurven hingegen jeweils bei einer hohen und einer tiefen Fokuslage, und die später aufgenommene Kurve weist im Bereich zwischen den beiden Schnittpunkten einen negativen Offset und außerhalb dieses Bereichs jeweils einen positiven Offset auf.

Die Erfindung betrifft auch eine Laserbearbeitungsmaschine entsprechend dem Anspruch 14, mit einem Laserstrahlerzeuger zum Erzeugen eines Laserstrahls, mit einem Laserbearbeitungskopf, aus dem der Laserstrahl austritt, und einer Werkstück- oder Pulverauflage, die beide relativ zueinander bewegbar sind, und mit einer Maschinensteuerung, die programmiert ist, beim Laserbearbeiten eines Werkstücks die Vorschubgeschwindigkeit mindestens so weit zu erhöhen, bis es zu einem Bearbeitungsabriss kommt.

Die Laserbearbeitungsmaschine weist, entsprechend der Erfindung, einen Abrissdetektor zum Detektieren eines Bearbeitungsabrisses auf. Vorzugsweise weist die Laserbearbeitungsmaschine einen Datenspeicher auf, in dem die Bearbeitungslänge, die Bearbeitungszeit oder die Abrissgeschwindigkeit sowie der zugehörige Wert des Laserbearbeitungsparameters einander zugeordnet gespeichert werden. Besonders bevorzugt ist die Maschinensteuerung programmiert, anhand der gespeicherten Daten den Zusammenhang zwischen den Bearbeitungslängen, den zugehörigen Bearbeitungszeiten oder den zugehörigen Abrissgeschwindigkeiten und dem Laserbearbeitungsparameter automatisiert zu ermitteln und insbesondere mehrere ermittelte Zusammenhänge automatisiert miteinander zu vergleichen und auszuwerten.

Die Erfindung betrifft schließlich auch ein Computerprogrammprodukt entsprechend Anspruch17, welches Codemittel aufweist, die zum automatisierten Durchführen aller Schritte des oben beschriebenen Verfahrens angepasst sind, wenn das Programm auf der Maschinensteuerung der vorher definierten Laserbearbeitungsmaschine abläuft.

Weitere Vorteile und vorteilhafte Ausgestaltungen des Gegenstands der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: eine zum Durchführen des erfindungsgemäßen Verfahrens geeignete Laserbearbeitungsmaschine;
- Fig. 2: die Schnittlängen von jeweils bis zur Schnittabrissgeschwindigkeit durchgeführten Laserschnitten für unterschiedliche Werte eines Schneidparameters;
- Fig. 3: den Zusammenhang zwischen den Schnittlängen/Schneidzeiten/ Schnittabrissgeschwindigkeiten von jeweils bis zur Schnittabrissgeschwindigkeit durchgeführten Laserschnitten und dem Schneidparameter "z-Fokuslage des Laserstrahls";
- Fig. 4: den Zusammenhang zwischen den Schnittlängen/Schneidzeiten/ Schnittabrissgeschwindigkeiten von jeweils bis zur Schnittabrissgeschwindigkeit durchgeführten Laserschnitten und dem Schneidparameter "z-Fokuslage des Laserstrahls", jeweils für zwei unterschiedliche Laserleistungen für den Fall eines Fokusshifts;
- Fig. 5: den Zusammenhang zwischen den Schnittlängen/Schneidzeiten/ Schnittabrissgeschwindigkeiten von jeweils bis zur Schnittabrissgeschwindigkeit durchgeführten Laserschnitten und dem Schneidparameter "z-Fokuslage des Laserstrahls", jeweils für unterschiedliche Laserleistungen;
- Fig. 6: den Zusammenhang zwischen den Schnittlängen/Schneidzeiten/ Schnittabrissgeschwindigkeiten von jeweils bis zur Schnittabrissgeschwindigkeit durchgeführten Laserschnitten und dem Schneidparameter "z-Fokuslage des Laserstrahls", jeweils für unterschiedliche Fokusdurchmesser;
- Fig. 7: die Durchschweißlängen von jeweils bis zur Abrissgeschwindigkeit durchgeführten Laserdurchschweißungen für unterschiedliche Werte eines Schweißparameters;
- Fig. 8: den Zusammenhang zwischen den Durchschweißlängen/Schweißzeiten/Abrissgeschwindigkeiten von jeweils bis zur Abrissgeschwindigkeit durchgeführten Laserdurchschweißungen und dem Schweißparameter "zFokuslage des Laserstrahls";
- Fig. 9: die Schmelzespurlängen von jeweils bis zur Abrissgeschwindigkeit erzeugten Schmelzespuren für unterschiedliche Werte eines Umschmelzparameters; und
- Fig. 10: den Zusammenhang zwischen den Schmelzespurlängen/Umschmelzzeiten/Abrissgeschwindigkeiten von jeweils bis zur Abrissgeschwindigkeit erzeugten Schmelzespuren und dem Umschmelzparameter "z-Fokuslage des Laserstrahls".

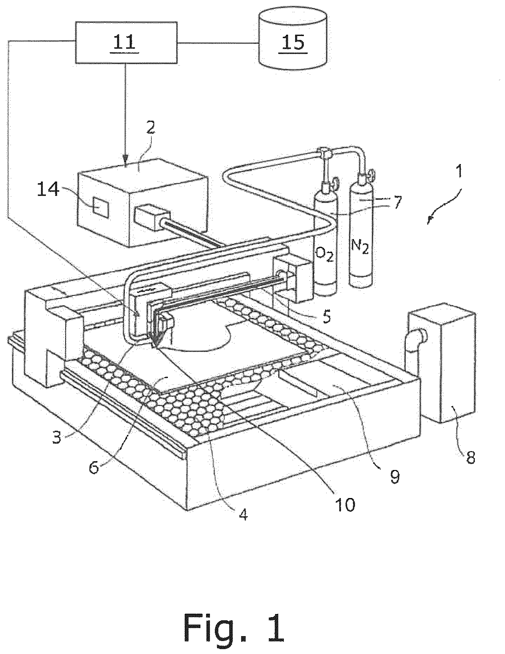

Die in **Fig. 1** perspektivisch dargestellte Laserbearbeitungsmaschine **1** weist beispielsweise einen CO₂-Laser, Diodenlaser oder Festkörperlaser als Laserstrahlerzeuger **2,** einen in X- und Y-Richtung verfahrbaren (Laser)Bearbeitungskopf **3** und eine hier als Werkstückauflage ausgebildete Werkstück- oder Pulverauflage **4** auf. Im Laserstrahlerzeuger 2 wird ein Laserstrahl **5** (cw- oder Pulsbetrieb) erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Werkstückauflage 4 ist ein plattenförmiges Werkstück **6** angeordnet. Der Laserstrahl 5 wird mittels einer im Bearbeitungskopf 3 angeordneten Fokussieroptik auf das Werkstück 6 gerichtet. Die Laserschneidmaschine 1 wird darüber hinaus mit Schneidgasen **7**, beispielsweise Sauerstoff und Stickstoff, und für einen LMD-Prozess mit Helium oder Argon versorgt. Die Verwendung des jeweiligen Schneidgases 7 ist vom Werkstückmaterial und von Qualitätsanforderungen an die Schnittkanten abhängig. Weiterhin ist eine Absaugeinrichtung **8** vorhanden, die mit einem Absaugkanal **9**, der sich unter der Werkstückauflage 4 befindet, verbunden ist. Das Schneidgas 7 wird einer Schneidgasdüse **10** des Bearbeitungskopfes 3 zugeführt, aus der es zusammen mit dem Laserstrahl 5 austritt. Die Laserbearbeitungsmaschine 1 weist weiterhin eine Maschinensteuerung **11** auf.

Mit der Energie des Laserstrahls 5 kann im Werkstück 6 ein bestimmtes Schmelzvolumen bzw. eine bestimmtes Schmelzrate erzeugt werden. Wird beim Laserschneiden die Energie des Laserstrahls 5 zunehmend quer zur Vorschubrichtung des Laserstrahls 5 deponiert, z.B. aufgrund eines größeren Fokus- bzw. Strahldurchmessers auf dem Werkstück 6, so nimmt die maximal mögliche Schneidgeschwindigkeit ab.

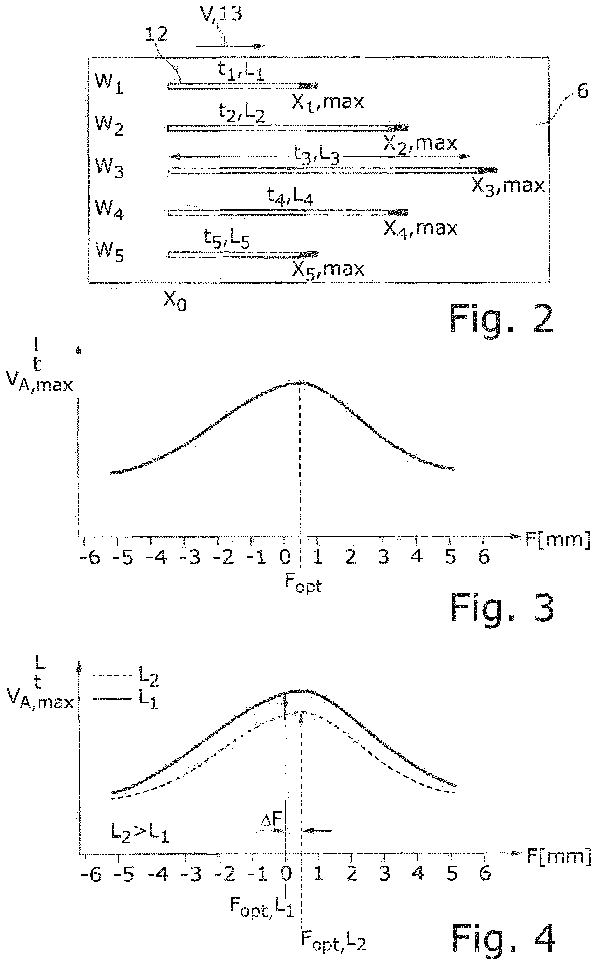

Um den Einfluss eines Schneidparameters, z.B. des Schneidparameters "z-Fokuslage **F** des Laserstrahls 5", beim Laserschneiden des Werkstücks 6 zu bestimmen, wird wie folgt vorgegangen:
Wie in **Fig. 2** gezeigt, werden an dem Werkstück 6 - von der Maschinensteuerung 11 vollautomatisiert gesteuert - am Startpunkt **x₀** mehrere Laserschnitte **12** in Vorschubrichtung **13** durchgeführt, und zwar für hier fünf unterschiedliche Werte **W₁** bis **W₅** des Schneidparameters. Dabei wird bei den Laserschnitten 12 die Schneidgeschwindigkeit **v** des Laserstrahls 5 jeweils mindestens so weit erhöht, bis es bei den Endpunkten **x_{1,max}** bis **x_{5,max}** jeweils zu einem Schnittabriss kommt. Ein Abrissdetektor **14,** z.B. eine Photodiode im Laserstrahlerzeuger 2, detektiert den Schnittabriss und schaltet den Laserstrahl 5 aus.

Anschließend wird - von der Maschinensteuerung 11 vollautomatisiert gesteuert - der Zusammenhang zwischen den Schnittlängen **L** der Laserschnitte 12, den zugehörigen Schneidzeiten **t** oder den zugehörigen Schnittabrissgeschwindigkeiten **v_{A}** und dem Schneidparameter anhand der gemessenen Schnittlängen **L₁** bis **L₅**, der zugehörigen Schneidzeiten **t₁** bis **t₅** oder der zugehörigen Schnittabrissgeschwindigkeiten **v_{A,1}** bis **v_{A,5}** der Laserschnitte 12 ermittelt.

Durch die Veränderung der z-Fokuslage werden unterschiedliche Energiemengen quer zur Vorschubrichtung deponiert, was zu unterschiedlichen Schnittabrissgeschwindigkeiten führt, d.h., die Laserschnitte 12 bzw. die Schneidzeiten t sind unterschiedlich lang. Die Schneidzeiten t zwischen Schnittbeginn und Schnittabriss werden mit Hilfe des Abrissdetektors 14 detektiert.

Alternativ kann die zum Zeitpunkt des Schnittabrisses herrschende Schneidgeschwindigkeit von der Maschinensteuerung 11 als Schnittabrissgeschwindigkeit v_{A} feststellt und dem jeweiligen Wert des Schneidparameters zuordnet werden.

In **Fig. 3** ist der interpolierte Zusammenhang zwischen den Schnittlängen L /Schneidzeiten t / Schnittabrissgeschwindigkeiten v_{A} von jeweils bis zur Schnittabrissgeschwindigkeit durchgeführten Laserschnitten 12 und dem Schneidparameter "z-Fokuslage F des Laserstrahls 5" dargestellt. Die Stellgröße ist also die z-Fokuslage F des Laserstrahls 5. Diese wird verändert und ein Laserschnitt 12 mit kontinuierlicher Beschleunigung bis zum Schnittabriss durchgeführt. Anschließend wird die z-Fokuslage verändert, die Maschinenachse verfährt auf die nächste Position, und der Laserschnitt 12 wird auf dem Werkstück 6 mit der gleichen kontinuierlichen Beschleunigung bis zum Schnittabriss wiederholt. Diejenige z-Fokuslage des Laserstrahls 5, bei der die Schnittlänge L bzw. die zugehörige Schneidzeit t bzw. die zugehörige Schnittabrissgeschwindigkeit v_{A} der Laserschnitte 12 maximal ist, wird von der Maschinensteuerung 11 automatisiert als die optimale Fokuslage **Fₒₚₜ** bestimmt, und die Maschinensteuerung 11 stellt die Fokuslage des Laserstrahls 5 selbständig auf diese optimale Fokuslage Fₒₚₜ ein.

Wird, wie in **Fig. 4** gezeigt, der Zusammenhang zwischen den Schnittlängen L /Schneidzeiten t / Schnittabrissgeschwindigkeiten v_{A} von Laserschnitten 12 und der z-Fokuslage F jeweils für zwei unterschiedliche Laserleistungen L₁ und L₂ (L₁>L₂) aufgenommen und die jeweils optimale Fokuslage **F_{opt,L1}** und **F_{opt,}** L₂ ermittelt, so kann daraus ein leistungsabhängiger Fokusshift **ΔF = F_{opt,L1} - F_{opt, L2}** bestimmt werden.

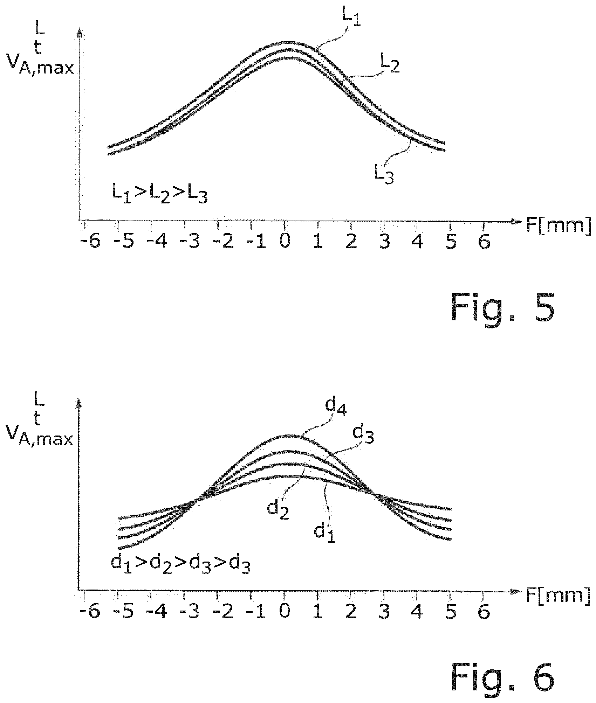

**Fig. 5** zeigt den Zusammenhang zwischen den Schnittlängen L /Schneidzeiten t / Schnittabrissgeschwindigkeiten v_{A} von Laserschnitten 12 in Abhängigkeit der z-Fokuslage F des Laserstrahls 12, jeweils für unterschiedliche Laserleistungen **L₁**, **L₂**, **L₃** (L₁>L₂>L₃). Bei geringerer Leistung ergibt sich über den gesamten Wertebereich der z-Fokuslage F eine Abnahme (negativer Offset) der jeweiligen Schnittlängen, Schneidzeiten oder Schnittabrissgeschwindigkeiten gegenüber den Schnittlängen, Schneidzeiten oder Schnittabrissgeschwindigkeiten bei höherer Leistung.

**Fig. 6** zeigt den Zusammenhang zwischen den Schnittlängen L /Schneidzeiten t / Schnittabrissgeschwindigkeiten v_{A} von Laserschnitten 12 in Abhängigkeit der z-Fokuslage F des Laserstrahls 12, jeweils für unterschiedliche Fokusdurchmesser **d₁**, **d₂**, **d₃**, **d₄** (d₁>d₂>d₃>d₄) des Laserstrahls 12. Die einzelnen Kurven schneiden sich jeweils bei einer hohen und einer tiefen Fokuslage. Im Vergleich zu einem größeren Fokusdurchmesser weisen die Schnittlängen, Schneidzeiten oder Schnittabrissgeschwindigkeiten bei einem kleineren Fokusdurchmesser im Bereich zwischen den beiden Schnittpunkten einen negativen Offset und außerhalb dieses Bereichs einen positiven Offset auf.

Um einen im Lauf der Zeit auftretenden Leistungsverlust oder eine im Lauf der Zeit auftretende Strahlaufweitung feststellen zu können, werden bei nominell gleicher Laserleistung und nominell gleichem Fokusdurchmesser die Zusammenhänge zwischen den Schnittlängen L /Schneidzeiten t / Schnittabrissgeschwindigkeiten v_{A} und der z-Fokuslage F des Laserstrahls 12 zu zwei unterschiedlichen Zeitpunkten ermittelt. Die ermittelten Kurven werden miteinander verglichen, um anhand der unterschiedlichen Kurvenverläufe der Fign. 5 und 6 entweder einen Leistungsverlust oder eine Strahlaufweitung festzustellen.

Die maschinenseitige Umsetzung kann beispielsweise wie folgt erfolgen:
1. Der Ist-Zustand der jeweiligen Laserbearbeitungsmaschine 1 wird durch Detektion der Schnittlänge L /Schneidzeit Δt / Schnittabrissgeschwindigkeit v_{A} in Abhängigkeit der z-Fokuslage F ermittelt.
2. Die ermittelten Werte werden in einem Datenspeicher **15** der Maschinensteuerung 11 als Referenz hinterlegt.
3. Die Maschinensteuerung 11 überprüft eigenständig, mannlos und vollautomatisch zum beliebigen, vom Kunden freidefinierten Zeitpunkt die aktuellen Werte mit den hinterlegten Werten.
4. Ein Algorithmus der Maschinensteuerung 11 wertet die Ergebnisse aus.
5. Je nach Bedarf und Möglichkeit erfolgt eine beschränkte Nachstellung (Laserleistung, Fokuslage, ...) mit einem Hinweis bzw. einer Handlungsempfehlung.
6. Nach Überschreitung der definierten Grenzen wird ein Warnhinweis eingeblendet bzw. Serviceeinsatz empfohlen.
7. In einer Ampelfunktion wird der Maschinenzustand angezeigt.

Im Ergebnis ermöglicht es das beschriebene Verfahren, digitalisierte Daten mittels eines Schnittmusters zu sammeln, woraus nach Möglichkeiten die Laserbearbeitungsmaschine 1 sich eigenständig einstellt.

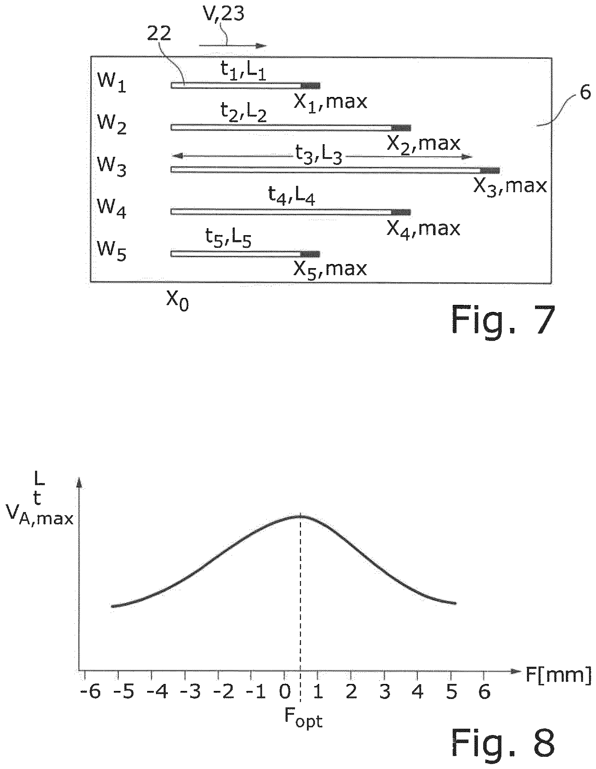

Um den Einfluss eines Schweißparameters, z.B. des Schweißparameters "z-Fokuslage F des Laserstrahls 5", beim Laserschweißen des Werkstücks 6 zu bestimmen, wird wie folgt vorgegangen:
Wie in **Fig. 7** gezeigt, werden an dem Werkstück 6 - von der Maschinensteuerung 11 vollautomatisiert gesteuert - am Startpunkt x₀ mehrere Laserdurchschweißungen **22** in Vorschubrichtung **23** durchgeführt, und zwar für hier fünf unterschiedliche Werte W₁ bis W₅ des Schweißparameters. Dabei wird bei den Laserdurchschweißungen 22 die Schweißgeschwindigkeit v des Laserstrahls 5 jeweils mindestens so weit erhöht, bis es bei den Endpunkten x_{1,max} bis x_{5,max} jeweils zu einem Durchschweißabriss kommt. Der Abrissdetektor 14 detektiert den Durchschweißabriss und schaltet den Laserstrahl 5 aus.

Anschließend wird - von der Maschinensteuerung 11 vollautomatisiert gesteuert - der Zusammenhang zwischen den Durchschweißlängen L der Laserdurchschweißungen 22, den zugehörigen Schweißzeiten t oder den zugehörigen Durchschweißabrissgeschwindigkeiten v_{A} und dem Schweißparameter anhand der gemessenen Durchschweißlängen L₁ bis L₅, der zugehörigen Schweißzeiten t₁ bis t₅ oder der zugehörigen Durchschweißabrissgeschwindigkeiten v_{A,1} bis v_{A,5} der Laserdurchschweißungen 22 ermittelt.

In **Fig. 8** ist der interpolierte Zusammenhang zwischen den Durchschweißlängen L / Schweißzeiten t / Durchschweißabrissgeschwindigkeiten v_{A} von jeweils bis zur Durchschweißabrissgeschwindigkeit durchgeführten Laserdurchschweißungen 22 und dem Schneidparameter "z-Fokuslage F des Laserstrahls 5" dargestellt. Diejenige z-Fokuslage des Laserstrahls 5, bei der die Durchschweißlänge L bzw. die zugehörige Schweißzeit t bzw. die zugehörige Durchschweißabrissgeschwindigkeit v_{A} der Laserdurchschweißungen 22 maximal ist, wird von der Maschinensteuerung 11 automatisiert als die optimale Fokuslage Fₒₚₜ bestimmt, und die Maschinensteuerung 11 stellt die Fokuslage des Laserstrahls 5 selbständig auf diese optimale Fokuslage Fₒₚₜ ein. Die Ermittlung der Fokuslage kann einmal mit geringer Laserleistung und einmal mit hoher Laserleistung durchgeführt werden. Die Differenz der beiden Fokuslagen entspricht dem leistungsabhängigen Fokusshift.

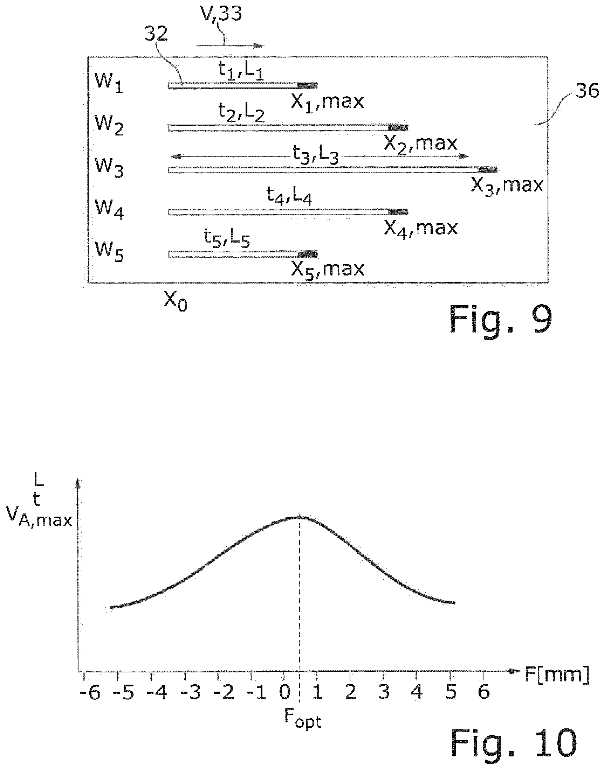

Um beim LMD-Prozess den Einfluss eines Umschmelzparameters, z.B. des Umschmelzparameters "z-Fokuslage F des Laserstrahls 5", beim Umschmelzen von Metallpulver mittels des Laserstrahls 5 zu bestimmen, wird wie folgt vorgegangen:
Wie in **Fig. 9** gezeigt, werden in einem Pulverbett **36** der Pulverauflage 4 (alternativ ist auch ein Pulverstrahl möglich) - von der Maschinensteuerung 11 vollautomatisiert gesteuert - am Startpunkt x₀ mehrere Schmelzespuren **32** in Vorschubrichtung **33** durchgeführt, und zwar für hier fünf unterschiedliche Werte W₁ bis W₅ des Umschmelzparameters. Dabei wird bei den Schmelzespuren 32 die Vorschubgeschwindigkeit v des Laserstrahls 5 jeweils mindestens so weit erhöht, bis es bei den Endpunkten x_{1.max} bis x_{5,max} jeweils zu einem Schmelzespurabriss kommt. Der Abrissdetektor 14 detektiert den Schmelzespurabriss und schaltet den Laserstrahl 5 aus.

Anschließend wird - von der Maschinensteuerung 11 vollautomatisiert gesteuert - der Zusammenhang zwischen den Schmelzespurlängen L der Schmelzespuren 32, den zugehörigen Umschmelzzeiten t oder den zugehörigen Schmelzespurabrissgeschwindigkeiten v_{A} und dem Umschmelzparameter anhand der gemessenen Schmelzespurlängen L₁ bis L₅, der zugehörigen Umschmelzzeiten t₁ bis t₅ oder der zugehörigen Schmelzespurabrissgeschwindigkeiten v_{A,1} bis v_{A,5} der Schmelzespuren 32 ermittelt.

In **Fig. 10** ist der interpolierte Zusammenhang zwischen den Schmelzespurlängen L / Umschmelzzeiten t / Schmelzespurabrissgeschwindigkeiten v_{A} von jeweils bis zur Schmelzespurabrissgeschwindigkeit durchgeführten Schmelzespuren 32 und dem Schneidparameter "z-Fokuslage F des Laserstrahls 5" dargestellt. Diejenige z-Fokuslage des Laserstrahls 5, bei der die Schmelzespurlänge L bzw. die zugehörige Umschmelzzeit t bzw. die zugehörige Schmelzespurabrissgeschwindigkeit v_{A} der Schmelzespuren 32 maximal ist, wird von der Maschinensteuerung 11 automatisiert als die optimale Fokuslage Fₒₚₜ bestimmt, und die Maschinensteuerung 11 stellt die Fokuslage des Laserstrahls 5 selbständig auf diese optimale Fokuslage Fₒₚₜ ein. Die Ermittlung der Fokuslage kann einmal mit geringer Laserleistung und einmal mit hoher Laserleistung durchgeführt werden. Die Differenz der beiden Fokuslagen entspricht dem leistungsabhängigen Fokusshift.

## Patentansprüche

1. Verfahren zum Ermitteln des Einflusses eines Laserbearbeitungsparameters auf eine Laserbearbeitung mittels eines Laserstrahls (5), **gekennzeichnet durch** folgende Schritte:
(a) Durchführen von linienförmigen Laserbearbeitungen (12; 22; 32) bei unterschiedlichen Werten (W₁ bis W₅) des Laserbearbeitungsparameters, wobei bei den Laserbearbeitungen (12; 22; 32) die Vorschubgeschwindigkeit (v) des Laserstrahls (5) jeweils mindestens so weit erhöht wird, bis es zu einem Bearbeitungsabriss kommt; und
(b) Ermitteln des Zusammenhangs zwischen den Bearbeitungslängen (L), den zugehörigen Bearbeitungszeiten (t) oder den zugehörigen Abrissgeschwindigkeiten (v_{A}) der Laserbearbeitungen (12; 22; 32) und dem Laserbearbeitungsparameter anhand der gemessenen Bearbeitungslängen (L₁ bis L₅), der zugehörigen Bearbeitungszeiten (t₁ bis t₅) oder der zugehörigen Abrissgeschwindigkeiten (v_{A,1} bis v_{A,5}) der Laserbearbeitungen (12; 22; 32).

2. Verfahren nach Anspruch 1, **dadurch gekennzeichnet, dass** der Einfluss eines Schneidparameters auf eine Werkstückbearbeitung mittels des Laserstrahls (5) ermittelt wird mit folgenden Schritten:
(a) Durchführen, von linienförmigen Laserschnitten (12) an einem Werkstück (6) bei unterschiedlichen Werten (W₁ bis W₅) des Schneidparameters, wobei bei den Laserschnitten (12) die Schneidgeschwindigkeit (v) jeweils mindestens so weit erhöht wird, bis es zu einem Schnittabriss kommt; und
(b) Ermitteln des Zusammenhangs zwischen den Schnittlängen (L), den zugehörigen Schneidzeiten (t) oder den zugehörigen Schnittabrissgeschwindigkeiten (v_{A}) der Laserschnitte (12) und dem Schneidparameter anhand der gemessenen Schnittlängen (L₁ bis L₅), der zugehörigen Schneidzeiten (t₁ bis t₅) oder der zugehörigen Schnittabrissgeschwindigkeiten (v_{A,1} bis v_{A,5}) der Laserschnitte (12).

3. Verfahren nach Anspruch 1, **dadurch gekennzeichnet, dass** der Einfluss eines Schweißparameters auf eine Werkstückbearbeitung mittels des Laserstrahls (5) ermittelt wird mit folgenden Schritten:
(a) Durchführen von linienförmigen Laserdurchschweißungen (22) an einem Werkstück (6) bei unterschiedlichen Werten (W₁ bis W₅) des Schweißparameters, wobei bei den Laserdurchschweißungen (22) die Schweißgeschwindigkeit (v) jeweils mindestens so weit erhöht wird, bis es zu einem Durchschweißabriss kommt; und
(b) Ermitteln des Zusammenhangs zwischen den Durchschweißlängen (L), den zugehörigen Schweißzeiten (t) oder den zugehörigen Durchschweißabrissgeschwindigkeiten (v_{A}) der Laserdurchschweißungen (22) und dem Schweißparameter anhand der gemessenen Durchschweißlängen (L₁ bis L₅), der zugehörigen Schweißzeiten (t₁ bis t₅) oder der zugehörigen Durchschweißabrissgeschwindigkeiten (v_{A,1} bis v_{A,5}) der Laserdurchschweißungen (22).

4. Verfahren nach Anspruch 1, **dadurch gekennzeichnet, dass** der Einfluss eines Umschmelzparameters beim Umschmelzen von Metallpulver mittels des Laserstrahls (5) ermittelt wird mit folgenden Schritten:
(a) Erzeugen von linienförmigen Schmelzespuren (32) bei unterschiedlichen Werten (W₁ bis W₅) des Umschmelzparameters, wobei bei den Schmelzespuren (32) die Vorschubgeschwindigkeit (v) des Laserstrahls (5) jeweils mindestens so weit erhöht wird, bis es zu einem Schmelzespurabriss kommt; und
(b) Ermitteln des Zusammenhangs zwischen den Schmelzespurlängen (L), den zugehörigen Umschmelzzeiten (t) oder den zugehörigen Schmelzespurabrissgeschwindigkeiten (v_{A}) der Schmelzespuren (32) und dem Umschmelzparameter anhand der gemessenen Schmelzespurlängen (L₁ bis L₅), der zugehörigen Umschmelzzeiten (t₁ bis t₅) oder der zugehörigen Schmelzespurabrissgeschwindigkeiten (v_{A,1} bis v_{A,5}) der Schmelzespuren (32).

5. Verfahren nach einem der vorhergehenden Ansprüche, **dadurch gekennzeichnet, dass** der Laserbearbeitungsparameter ein laserstrahlseitiger Parameter ist und/oder dass der Laserbearbeitungsparameter ein gasdynamischer Parameter bei vorbestimmter Gaszusammensetzung ist.

6. Verfahren nach einem der vorhergehenden Ansprüche, **dadurch gekennzeichnet, dass** die Vorschubgeschwindigkeit (v) schrittweise oder kontinuierlich mindestens so weit erhöht wird, bis es zu einem Bearbeitungsabriss kommt.

7. Verfahren nach einem der vorhergehenden Ansprüche, **dadurch gekennzeichnet, dass** der Laserstrahl (5) bei Erreichen des Bearbeitungsabrisses ausgeschaltet wird.

8. Verfahren nach einem der vorhergehenden Ansprüche, **dadurch gekennzeichnet, dass** derjenige Parameterwert, bei dem die Bearbeitungslänge (L) bzw. die zugehörige Bearbeitungszeit (t) bzw. die zugehörige Abrissgeschwindigkeit (v_{A}) der Laserbearbeitungen (12; 22; 32) maximal ist, als der optimale Parameterwert bestimmt wird.

9. Verfahren nach Anspruch 8, **dadurch gekennzeichnet, dass** der optimale Parameterwert durch Interpolation der Bearbeitungslängen (L) der Laserbearbeitungen (12; 22; 32), der zugehörigen Bearbeitungszeiten (t) oder der Abrissgeschwindigkeiten (v_{A}) bestimmt wird.

10. Verfahren nach Anspruch 8 oder 9, **dadurch gekennzeichnet, dass** der zu ermittelnde optimale Parameterwert eine in Strahlrichtung (z) optimale Fokuslage (Fₒₚₜ) des Laserstrahls (5) ist und dass in Schritt (a) die Laserbearbeitungen (12; 22; 32) bei in Strahlrichtung (z) unterschiedlichen Fokuslagen des Laserstrahls (5) durchgeführt werden.

11. Verfahren nach Anspruch 10, **dadurch gekennzeichnet, dass** die in Strahlrichtung (z) optimale Fokuslage (Fₒₚₜ) des Laserstrahls (5) jeweils für unterschiedliche Laserleistungen (L₁, L₂) ermittelt und daraus ein leistungsabhängiger Fokusshift (ΔF) bestimmt wird.

12. Verfahren nach Anspruch 8 oder 9, **dadurch gekennzeichnet, dass** der zu ermittelnde optimale Parameterwert ein Fokusdurchmesser (dₒₚₜ) des Laserstrahls (5) ist und dass in Schritt (a) die Laserbearbeitungen (12; 22; 32) bei unterschiedlichen Fokusdurchmessern des Laserstrahls (5) durchgeführt werden.

13. Verfahren nach einem der vorhergehenden Ansprüche, **dadurch gekennzeichnet, dass** bei nominell gleicher Laserleistung und nominell gleichem Fokusdurchmesser die Schritte (a) und (b) für unterschiedliche Werte des Laserbearbeitungsparameters "Fokuslage des Laserstrahls (5) in Strahlrichtung (z)" zu zwei unterschiedlichen Zeitpunkten durchgeführt werden und dass durch Vergleichen der jeweils ermittelten Zusammenhänge zwischen den Bearbeitungslängen (L), den zugehörigen Bearbeitungszeiten (t) oder den zugehörigen Abrissgeschwindigkeiten (v_{A}) der Laserbearbeitungen (12; 22; 32) und dem Laserbearbeitungsparameter "Fokuslage des Laserstrahls (5) in Strahlrichtung (z)" entweder eine Veränderung der auf eine Bearbeitungsebene (6) auftreffenden Laserleistung oder eine Veränderung des Fokusdurchmessers in der Bearbeitungsebene des Laserstrahls (5) festgestellt wird.

14. Laserbearbeitungsmaschine (1) mit einem Laserstrahlerzeuger (2) zum Erzeugen eines Laserstrahls (5), mit einem Laserbearbeitungskopf (3), aus dem der Laserstrahl (5) austritt, und einer Werkstück- oder Pulverauflage (4), die beide relativ zueinander bewegbar sind, **gekennzeichnet durch** eine Maschinensteuerung (11), die programmiert ist, die Schritte des Verfahrens nach einem der Ansprüche 1 bis 13 automatisiert durchzuführen, so dass beim beim Laserbearbeiten die Vorschubgeschwindigkeit (v) des Laserstrahls (5) mindestens so weit erhöht wird, bis es zu einem Bearbeitungsabriss kommt, und durch einen Abrissdetektor (14) zum Detektieren des Bearbeitungsabrisses.

15. Laserbearbeitungsmaschine nach Anspruch 14, **gekennzeichnet durch** einen Datenspeicher (15), in dem die Bearbeitungslänge (L), die Bearbeitungszeit (t) oder die Abrissgeschwindigkeit (v_{A}) sowie der zugehörige Wert des Laserbearbeitungsparameters gespeichert werden.

16. Laserbearbeitungsmaschine nach Anspruch 15, **dadurch gekennzeichnet, dass** die Maschinensteuerung (11) programmiert ist, anhand der gespeicherten Daten den Zusammenhang zwischen den Bearbeitungslängen (L), den zugehörigen Bearbeitungszeiten (t) oder den zugehörigen Abrissgeschwindigkeiten (v_{A}) und dem Bearbeitungsparameter automatisiert zu ermitteln.

17. Computerprogrammprodukt, welches Codemittel aufweist, die zum automatisierten Durchführen aller Schritte des Verfahrens nach einem der Ansprüche 1 bis 13 angepasst sind, wenn das Programm auf der Maschinensteuerung (11) der Laserbearbeitungsmaschine (1) nach einem der Ansprüche 14 bis 16 abläuft.

## Claims

1. A method for determining the influence of a laser machining parameter on a laser machining process using a laser beam (5), **characterised by** the following steps:
(a) carrying out line-shaped laser machining processes (12; 22; 32) at different values (W₁ to W₅) of the laser machining parameter, wherein the feed speed (v) of the laser beam (5) is increased during the laser machining processes (12; 22; 32) at least to the extent that a machining break occurs; and
(b) determining the relationship between the machining lengths (L), the related machining times (t) or the related break speeds (v_{A}) of the laser machining processes (12; 22; 32) and the laser machining parameter based on the measured machining lengths (L₁ to L₅), the related machining times (t₁ to t₅) or the related break speeds (v_{A,1} to v_{A,5}) of the laser machining processes (12; 22; 32).

2. The method according to claim 1, **characterised in that** the influence of a cutting parameter on workpiece machining process using the laser beam (5) is determined with the following steps:
(a) carrying out line-shaped laser cuts (12) on a workpiece (6) at different values (W₁ to W₅) of the cutting parameter, wherein the cutting speed (v) is respectively increased during the laser cuts (12) at least to the extent that a cutting break occurs; and
(b) determining the relationship between the cutting lengths (L), the related cutting times (t) or the related cutting break speeds (v_{A}) of the laser cuts (12) and the cutting parameter based on the measured cutting lengths (L₁ to L₅), the related cutting times (t₁ to t₅) or the related cutting break speeds (v_{A,1} to v_{A,5}) of the laser cuts (12).

3. The method according to claim 1, **characterised in that** the influence of a welding parameter on workpiece machining process using the laser beam (5) is determined with the following steps:
(a) carrying out line-shaped laser penetration welding processes (22) on a workpiece (6) at different values (W₁ to W₅) of the welding parameter, wherein the welding speed (v) is respectively increased during the laser penetration welding processes (22) at least to the extent that a welding penetration break occurs; and
(b) determining the relationship between the welding penetration lengths (L), the related welding times (t) or the related welding penetration break speeds (v_{A}) of the laser penetration welding processes (22) and the welding parameter based on the measured welding penetration lengths (L₁ to L₅), the related welding times (t₁ to t₅), or the related welding penetration break speeds (v_{A,1} to v_{A,5}) of the laser penetration welding processes (22).

4. The method according to claim 1, **characterised in that** the influence of a remelt parameter during remelting of metal powder using the laser beam (5) is determined with the following steps:
(a) generating line-shaped melt traces (32) at different values (W₁ to W₅) of the remelt parameter, wherein the feed speed (v) of the laser beam (5) is respectively increased at the melt traces (32) at least to the extent that a melt trace break occurs; and
(b) determining the relationship between the melt trace lengths (L), the related remelt times (t) or the related melt trace break speeds (v_{A}) of the melt traces (32) and the remelt parameter based on the measured melt trace lengths (L₁ to L₅), the related remelt times (t₁ to t₅) or the related melt trace break speeds (v_{A,1} to v_{A,5}) of the melt traces (32).

5. The method according to one of the preceding claims, **characterised in that** the laser machining parameter is a laser beam-side parameter and/or that the laser machining parameter is a gas-dynamic parameter with a predetermined gas composition.

6. The method according to one of the preceding claims, **characterised in that** the feed speed (v) is increased gradually or continuously at least to the point where a machining break occurs.

7. The method according to one of the preceding claims, **characterised in that** the laser beam (5) is deactivated when the machining break is reached.

8. The method according to one of the preceding claims, **characterised in that** the parameter value, at which the machining length (L) or the related machining time (t) or the related break speed (v_{A}) of the laser machining processes (12; 22; 32) is at the maximum, is determined as the optimal parameter value.

9. The method according to claim 8, **characterised in that** the optimal parameter value is determined by interpolation of the machining lengths (L) of the laser machining processes (12; 22; 32), the related machining times (t) or the break speeds (v_{A}).

10. The method according to claim 8 or 9, **characterised in that** the optimal parameter value to be determined is an optimal focus position (Fₒₚₜ) of the laser beam (5) in the beam direction (z) and **in that**, in step (a), the laser machining processes (12; 22; 32) are carried out with different focus positions of the laser beam (5) in the beam direction (z).

11. The method according to claim 10, **characterised in that** the optimal focus position (Fₒₚₜ) of the laser beam (5) in the beam direction (z) is determined for different laser powers (L₁, L₂) and a performance-dependent focus shift (ΔF) is determined therefrom.

12. The method according to claim 8 or 9, **characterised in that** the optimal parameter value to be determined is a focus diameter (dₒₚₜ) of the laser beam (5) and **in that**, in step (a), the laser machining processes (12; 22; 32) are carried out at different focus diameters of the laser beam (5).

13. The method according to any one of the preceding claims, **characterised in that**, with nominally identical laser performance and nominally identical focus diameter, steps (a) and (b) are carried out for different values of the laser machining parameter "focal position of the laser beam (5) in the beam direction (z)" at two different points in time and **in that** by comparing the respective correlations determined between the machining lengths (L), the related machining times (t) or the related break speeds (v_{A}) of the laser machining processes (12; 22; 32) and the laser machining parameter "focal position of the laser beam (5) in the beam direction (z)", a change is determined either in the laser performance impinging on a machining plane (6) or a change in the focal diameter in the machining plane of the laser beam (5).

14. A laser machining machine (1) having a laser beam generator (2) for generating a laser beam (5), having a laser machining head (3), from which the laser beam (5) emerges, and a workpiece or powder layer (4), both of which can be moved relative to one another, **characterised by** a machine control system (11) which is programmed to carry out the steps of the method according to any one of claims 1 to 13 automatically, so that, during laser machining, the feed speed (v) of the laser beam (5) is increased at least until a machining break occurs, and by a break detector (14) for detecting the machining break.

15. The laser machining machine according to claim 14, **characterised by** a data memory (15), in which the machining length (L), the machining time (t) or the break speed (v_{A}) and the related value of the laser machining parameter are stored.

16. The laser machining machine according to claim 15, **characterised in that** the machine control system (11) is programmed to automatically determine the relationship between the machining lengths (L), the related machining times (t) or the related break speeds (v_{A}) and the machining parameters based on the stored data.

17. A computer program product having coding means, which are adapted to automatically carry out all steps of the method according to any one of claims 1 to 13 when the program runs on the machine control system (11) of the laser machining machine (1) according to any one of claims 14 to 16.

## Revendications

1. Procédé de détermination de l'influence d'un paramètre d'usinage au laser sur un usinage au laser à l'aide d'un faisceau laser (5), **caractérisé par** les étapes suivantes :
(a) réalisation d'usinages au laser (12 ; 22 ; 32) linéaire à différentes valeurs (W₁ à W₅) du paramètre d'usinage au laser, la vitesse d'avancement (v) du faisceau laser (5) étant respectivement augmentée pendant les usinages au laser (12 ; 22 ; 32) au moins jusqu'à rupture de l'usinage ; et
(b) détermination de la relation entre les longueurs d'usinage (L), les temps d'usinage (t) associés ou les vitesses de rupture (v_{A}) associées des usinages au laser (12 ; 22 ; 32) et le paramètre d'usinage au laser sur la base des longueurs d'usinage (L₁ à L₅) mesurées, des temps d'usinage (t₁ à t₅) associés ou des vitesses de rupture (v_{A.1} à v_{A.5}) associées des usinages au laser (12 ; 22 ; 32).

2. Procédé selon la revendication 1, **caractérisé en ce que** l'influence d'un paramètre de découpe sur l'usinage de la pièce est déterminée à l'aide du faisceau laser (5), le procédé comportant les étapes suivantes :
(a) réalisation de découpes au laser (12) linéaires sur une pièce (6) à différentes valeurs (W₁ à W₅) du paramètre de découpe, la vitesse de découpe (v) des découpes au laser (12) étant respectivement augmentée au moins jusqu'à la rupture de découpe ; et
(b) détermination de la relation entre les longueurs de découpe (L), les temps de découpe (t) associés ou les vitesses de rupture de découpe (v_{A}) associées des découpes au laser (12) et le paramètre de découpe sur la base des longueurs de découpe (L₁ à L₅) mesurées, des temps de découpe (t₁ à t₅) associés ou des vitesses de rupture de découpe (v_{A.1} à v_{A.5}) associées des découpes au laser (12).

3. Procédé selon la revendication 1, **caractérisé en ce que** l'influence d'un paramètre de soudage sur l'usinage de la pièce est déterminée à l'aide du faisceau laser (5), le procédé comportant les étapes suivantes :
(a) réalisation de soudures profondes au laser (22) linéaires sur une pièce (6) à différentes valeurs (W₁ à W₅) du paramètre de soudage, la vitesse de soudage (v) pour le soudage profond au laser (22) étant respectivement augmentée au moins jusqu'à la rupture par soudage profond ; et
(b) détermination de la relation entre les longueurs de soudage profond (L), les temps de soudage (t) associés ou les vitesses de rupture par soudage profond (v_{A}) associées des soudages profonds au laser (22) et le paramètre de soudage sur la base des longueurs de soudage profond (L₁ à L₅) mesurées, des temps de soudage (t₁ à t₅) associés ou des vitesses de rupture par soudage profond (v_{A.1} à v_{A.5}) associées des soudages profonds au laser (22).

4. Procédé selon la revendication 1, **caractérisé en ce que** l'influence d'un paramètre de refusion lors de la refusion de poudre métallique est déterminée à l'aide du faisceau laser (5), le procédé comportant les étapes suivantes :
(a) génération de traces de fusion (32) linéaires à différentes valeurs (W₁ à W₅) du paramètre de refusion, la vitesse d'avancement (v) du faisceau laser (5) étant respectivement augmentée jusqu'à la rupture de la trace de fusion (32) ; et
(b) détermination de la relation entre les longueurs de traces de fusion (L), les temps de refusion (t) associés ou les vitesses de rupture des traces de fusion (v_{A}) associées des traces de fusion (32) et le paramètre de refusion sur la base des longueurs de traces de fusion (L₁ à L₅) mesurées, des temps de refusion (t₁ à t₅) associés ou des vitesses de rupture des traces de fusion (v_{A,1} à v_{A,5}) associées des traces de fusion (32).

5. Procédé selon l'une des revendications précédentes, **caractérisé en ce que** le paramètre d'usinage au laser est un paramètre côté faisceau laser et/ou **en ce que** le paramètre d'usinage au laser est un paramètre aéraulique avec une composition gazeuse prédéterminée.

6. Procédé selon l'une des revendications précédentes, **caractérisé en ce que** la vitesse d'avancement (v) est augmentée progressivement ou continuellement au moins jusqu'à la rupture d'usinage.

7. Procédé selon l'une des revendications précédentes, **caractérisé en ce que** le faisceau laser (5) est désactivé lorsque la rupture d'usinage est atteinte.

8. Procédé selon l'une des revendications précédentes, **caractérisé en ce que** la valeur du paramètre à laquelle la longueur d'usinage (L), le temps d'usinage (t) associé ou la vitesse de rupture (v_{A}) associée des usinages au laser (12 ; 22 ; 32) est à son maximum est déterminée comme la valeur optimale du paramètre.

9. Procédé selon la revendication 8, **caractérisé en ce que** la valeur optimale du paramètre est déterminée par interpolation des longueurs d'usinage (L) des usinages au laser (12 ; 22 ; 32), des temps d'usinage (t) associés ou des vitesses de rupture (VA).

10. Procédé selon la revendication 8 ou 9, **caractérisé en ce que** la valeur optimale du paramètre à déterminer est une position focale optimale (Fₒₚₜ) du faisceau laser (5) dans la direction du faisceau (z) et qu'à l'étape (a), les usinages au laser (12 ; 22 ; 32) peuvent être effectués à différentes positions focales du faisceau laser (5) dans la direction du faisceau (z).

11. Procédé selon la revendication 10, **caractérisé en ce que** la position focale optimale (Fₒₚₜ) du faisceau laser (5) dans la direction du faisceau (z) est respectivement déterminée pour différentes puissances laser (L₁, L₂) et qu'un décalage focal (ΔF) dépendant de la puissance est déterminé à partir de cela.

12. Procédé selon la revendication 8 ou 9, **caractérisé en ce que** la valeur optimale du paramètre à déterminer est un diamètre au point focal (dₒₚₜ) du faisceau laser (5) et **en ce qu'**à l'étape (a), les usinages au laser (12 ; 22 ; 32) s'effectuent à différents diamètres au point focal du faisceau laser (5).

13. Procédé selon l'une des revendications précédentes, **caractérisé en ce que** pour la même puissance laser nominale et le même diamètre nominal au point focal, les étapes (a) et (b) sont effectuées pour différentes valeurs du paramètre d'usinage au laser « position focale du faisceau laser (5) dans la direction du faisceau (z) » à deux instants différents et **en ce qu'**est détecté(e) un changement de la puissance laser se produisant dans un plan d'usinage (6) ou une modification du diamètre au point focal dans le plan d'usinage du faisceau laser (5) en comparant les relations respectivement déterminées entre les longueurs d'usinage (L), les temps d'usinage (t) associés ou les vitesses de rupture (v_{A}) associées des usinages au laser (12 ; 22 ; 32) et le paramètre d'usinage au laser « position focale du faisceau laser (5) dans la direction du faisceau (z) ».

14. Machine d'usinage au laser (1) dotée d'un générateur de faisceau laser (2) pour générer un faisceau laser (5), d'une tête d'usinage au laser (3) d'où sort le faisceau laser (5) et d'un support de pièce à usiner ou de poudre (4), qui sont tous les deux mobiles l'un par rapport à l'autre, **caractérisé par** une commande de machine (11) qui est programmée pour exécuter automatiquement les étapes du procédé selon l'une des revendications 1 à 13, de sorte que pendant l'usinage au laser, la vitesse d'avancement (v) du faisceau laser (5) est augmentée au moins jusqu'à ce qu'une rupture d'usinage se produise, et par un détecteur de rupture (14) servant à détecter la rupture d'usinage.

15. Machine d'usinage au laser selon la revendication 14, **caractérisée par** une mémoire de données (15) dans laquelle la longueur d'usinage (L), le temps d'usinage (t) ou la vitesse de rupture (v_{A}) ainsi que la valeur associée du paramètre d'usinage au laser sont stockés.

16. Machine d'usinage au laser selon la revendication 15, **caractérisée en ce que** la commande de machine (11) est programmée pour déterminer automatiquement, à l'aide des données stockées, la relation entre les longueurs d'usinage (L), les temps d'usinage (t) associés ou les vitesses de rupture (v_{A}) associées et le paramètre d'usinage.

17. Produit programme informatique qui comporte des supports de code qui sont adaptés pour exécuter automatiquement toutes les étapes du procédé selon l'une des revendications 1 à 13 lorsque le programme s'exécute sur la commande de machine (11) de la machine d'usinage au laser (1) selon l'une des revendications 14 à 16.
